# EUROPÄISCHE PATENTSCHRIFT

(11) **EP 3 026 983 B1**
(45) Veröffentlichungstag und Bekanntmachung des Hinweises auf die Patenterteilung: **14.06.2017**
(21) Anmeldenummer: 14194773.9
(22) Anmeldetag: 25.11.2014
(51) Int. Cl.: H05B 6/12, F16B 7/04, F24C 15/10

(54) **Verbindungsteil zum Einbau an zwei Gehäuseteile und Anordnung von zwei Gehäuseteilen**
Connecting part for installation on two housing parts and assembly of two housing parts
Élément de liaison destiné à être intégré à deux éléments de boîtier et agencement de deux éléments de boîtier

(43) Veröffentlichungstag der Anmeldung: 01.06.2016
(73) Patentinhaber: E.G.O. Elektro-Gerätebau GmbH, 75038 Oberderdingen (DE)
(72) Erfinder: Graff, Frank, 16818 Radensleben (DE); Gaertner, Michael, 12555 Berlin (DE); Ungethuem, Uwe, 15528 Spreenhagen (DE)
(74) Vertreter: Patentanwälte Ruff, Wilhelm, Beier, Dauster & Partner mbB

(56) Entgegenhaltungen:
- DE-A1-102013 218 714
- US-A- 3 679 870
- Fs: "FTS-200H3 FTS-200H3 Telescoping Channel FTS-200H3 and FS-200H3 (combination)", , 7. Juli 2013 (2013-07-07), Seite 664, XP055197594, Gefunden im Internet: URL:http://www.flexstrut.com/uploads/FTS20 0H3-1212.pdf [gefunden am 2015-06-23]

## Beschreibung

### Anwendungsgebiet und Stand der Technik

Die Erfindung betrifft eine Anordnung von zwei Gehäuseteilen eines Induktionskochfeldes mit einem Verbindungsteil zum Einbau an zwei Gehäuseteile des Induktionskochfeldes.

Bei Induktionskochfeldern werden häufig zwei Induktionsheizspulen für einen gemeinsamen Betrieb sozusagen zusammengefasst und samt ihrer Ansteuerung, also einer entsprechenden Leistungselektronik, in einem gemeinsamen eigenen Gehäuseteil angeordnet. Dieses Gehäuseteil wird dann unter einer Kochfeldplatte des Induktionskochfeldes, gegebenenfalls auf einem zusätzlichen Träger, beim fertigen Induktionskochfeld bzw. bei dessen Montage angeordnet. Dabei müssen in aller Regel Verbindungskabel auch von einem Gehäuseteil zu einem anderen geführt sein. Diese sind während der Montage des Induktionskochfeldes und auch nachher im Betrieb möglicher Beschädigung ausgesetzt.

Aus der DE 10 2013 218 714 A1 ist ein Induktionskochfeld bekannt mit Montageleisten im Inneren, an denen Heizeinrichtungen befestigt sind.

Aus der US 3,679,870 A ist eine elektrische Anschlusseinrichtung aus einem Kochfeld bekannt für elektrische Kontaktierungen. Das Kochfeld weist dabei ein Kochfeldgehäuse auf.

Aus der "FTS-200H3 Telescoping Channel FTS-200H3 and FTS-200H3 /Combination)" vom 7. Juli 2013, Seite 664, XP055197594 ist ein teleskopierbarer Längskanal bekannt, mit dem Tragkonstruktionen oder sonstige Tragkonstruktionen aufgebaut werden können. Es sind zwei U-artige Profile ineinander angeordnet, die gegeneinander verschoben werden können. Beide weisen ein Lochraster auf zur Befestigung.

### Aufgabe und Lösung

Der Erfindung liegt die Aufgabe zugrunde, eine eingangs genannte Anordnung von zwei Gehäuseteilen mit einem Verbindungsteil zu schaffen, mit der Probleme des Standes der Technik vermieden werden können und es insbesondere möglich ist, das Verbindungsteil einfach und anwendungssicher auszugestalten sowie die Montage eines Induktionskochfeldes zu erleichtern und zu verbessern.

Gelöst wird diese Aufgabe durch eine Anordnung mit den Merkmalen des Anspruchs 1. Vorteilhafte sowie bevorzugte Ausgestaltungen der Erfindung sind Gegenstand der weiteren Ansprüche und werden im Folgenden näher erläutert. Der Wortlaut der Ansprüche wird durch ausdrückliche Bezugnahme zum Inhalt der Beschreibung gemacht.

Es ist vorgesehen, dass das Verbindungsteil insgesamt in seiner Längsrichtung gesehen, also von seiner Verbindung mit dem einen Gehäuseteil zu seiner Verbindung mit dem anderen Gehäuseteil, einen U-förmigen Querschnitt aufweist und somit einen Kanal bildet. Es kann also einen Boden bzw. Kanalboden und zwei Seitenwände aufweisen. Dabei sollte das Verbindungsteil bzw. der durch dieses gebildete Kanal eine Öffnungsrichtung aufweisen, die derjenigen der Gehäuseteile entspricht bzw. im fertigen Induktionskochfeld nach oben zur Kochfeldplatte hin geht. Somit kann das Verbindungsteil, vorteilhaft ebenso wie die Gehäuseteile, die kastenartig ausgebildet sein können, durch die Kochfeldplatte abgedeckt bzw. verschlossen werden.

Des Weiteren weist das Verbindungsteil zwei Teilstücke auf. Vorteilhaft sind es genau zwei Teilstücke, so dass das Verbindungsteil besonders vorteilhaft insgesamt nur aus den zwei Teilstücken besteht.

Erfindungsgemäß sind die Teilstücke miteinander verbunden und dabei unverlierbar aneinander gehaltert, und zwar derart, dass sie in Längsrichtung verschiebbar sind, also die Länge des gesamten Verbindungsteils variiert werden kann. Dadurch können verschiedene, bauartbedingte oder durch Montagetoleranzen hervorgerufene Abstände der beiden Gehäuseteile zueinander ausgeglichen werden, selbst wenn jedes einzelne Teilstück bzw. insgesamt auch das Verbindungsteil genau lagefest mit den Gehäuseteilen verbunden ist. Die Längsverschiebbarkeit der beiden Gehäuseteile zueinander bzw. die Längenvariabilität des gesamten Verbindungsteils ist bevorzugt so ausgebildet, dass sie teleskopartig ist. Des Weiteren ist die Längsverschiebbarkeit vorteilhaft geführt, und zwar in dem Sinn, dass sie genau entlang der vorgenannten Längsrichtung erfolgt, besonders vorteilhaft als eine Art Parallelführung.

Das erste Teilstück weist ein vorderes Ende auf, und das zweite Teilstück weist auch ein vorderes Ende auf. An diesen vorderen Enden weisen die Teilstücke Verbindungsmittel auf, mit denen sie mit jeweils einem Gehäuseteil des Induktionskochfeldes formschlüssig verbunden werden können. Die Verbindungsmittel sind also an den im zusammengesetzten Zustand des Verbindungsteils freien bzw. vorderen Enden des Verbindungsteils vorgesehen, und zwar eben jeweils an jedem Teilstück ein Verbindungsmittel. Vorteilhaft sind die Verbindungsmittel, die später noch genauer beschrieben werden, identisch zueinander ausgebildet.

Somit erhält man mit der Erfindung eine Anordnung von zwei Gehäuseteilen eines Induktionskochfeldes mit einem Verbindungsteil, welches jeweils fest, möglicherweise lösbar, aber im Montagezustand und im fertig montierten Zustand des Induktionskochfeldes festgelegt, mit den Gehäuseteilen verbunden ist. Das Verbindungsteil schafft einen Kanal zwischen den beiden Gehäuseteilen, in dem vorteilhaft die vorgenannten Kabel zwischen den beiden verlaufen können. Vorteilhaft ist das Verbindungsteil dabei durchgängig bzw. bis auf die

Öffnung nach oben im Wesentlichen nach außen geschlossen zum besseren Schutz darin verlaufender Kabel. Durch die Längsverschiebbarkeit der beiden Teilstücke gegeneinander bzw. durch die Längenvariabilität des gesamten Verbindungsteils können die beiden Gehäuseteile variierende Abstände zueinander aufweisen und dennoch mittels des Verbindungsteils miteinander verbunden sein. Dies ist ein Vorteil nicht nur bei unterschiedlichen Varianten von Induktionskochfeldern mit variierenden Abständen, sondern auch bei Montagetoleranz-bedingten Unterschieden im Abstand bei gleichen Varianten.

In vorteilhafter Ausgestaltung der Erfindung weist das Verbindungsteil eine lösbare Rastverbindung auf, welche beim Zusammenschieben der beiden Teilstücke, also beim Zusammenbau des Verbindungsteils, einrastet. So kann ein Lösen der beiden Teilstücke verhindert werden, insbesondere sind sie auch unverlierbar aneinander gehaltert, was beim Montagevorgang ein Vorteil ist. Durch die Rastverbindung, die ein Auseinanderziehen der Teilstücke verhindert, kann deren Längsverschiebbarkeit begrenzt werden. So kann eine Längsverschiebbarkeit beispielsweise zwischen 1 mm und 20 mm eingestellt werden, mit der auch mehrere Varianten eines Induktionskochfeldes bzw. von Anordnungen von Gehäuseteilen zueinander abgedeckt werden können. Vor allem zum Ausgleich von kleineren Montagetoleranzen reicht eine geringere Längsverschiebbarkeit aus, beispielsweise zwischen 2 mm und 10 mm.

Eine vorgenannte Rastverbindung ist zwar mindestens einmal vorgesehen, vorteilhaft jedoch an beiden Teilstücken. Dabei können die Rastverbindungen gleich bzw. gleichartig ausgebildet sein, insbesondere identisch zueinander. Beide sollten die gleiche maximale Längsverschiebbarkeit bewirken, wodurch mehr Stabilität erreichbar ist. Zusätzlich können die Rastverbindungen zur exakten Führung der beiden Teilstücke zueinander dienen. Eine Rastverbindung weist vorteilhaft einen Rastarm mit Rasthaken am einen Teilstück und eine zugehörige Rastausnehmung am anderen Teilstück auf. Die Länge der Rastausnehmung kann zur Begrenzung der vorgenannten Längsverschiebbarkeit dienen. Die Rastausnehmung sollte eine Längserstreckung in Längsrichtung aufweisen, und die Bewegungsrichtung des Rasthakens am Rastarm kann im Wesentlichen quer bzw. rechtwinklig zu dieser Längserstreckung der Rastausnehmung sein.

In vorteilhafter Ausgestaltung der Erfindung liegen die beiden Rastverbindungen in etwa in einer Ebene. Besonders vorteilhaft sind sie an einem vorgenannten Boden des U-förmigen Querschnitts des Verbindungsteils bzw. an einem Kanalboden vorgesehen. Dabei sollten sowohl die beiden Rastarme einerseits als auch die beiden Rastausnehmungen andererseits auf der jeweils genau gleichen Ebene liegen.

In Ausgestaltung der Erfindung sind an den beiden Teilstücken Führungseinrichtungen vorgesehen, und zwar mindestens eine Führungseinrichtung, vorteilhaft zwei Führungseinrichtungen. Eine Führungseinrichtung ist besonders vorteilhaft formschlüssig ausgebildet, um eine exakte Führung zu bewirken. Dabei kann bevorzugt vorgesehen sein, dass ein Führungsteil eines Teilstücks so ausgebildet ist, dass er ein Führungsteil des anderen Teilstücks übergreift. So kann das erstgenannte Führungsteil eine Art Nut oder Kanal bilden, vorteilhaft an einer Seitenwand, wobei eine Seitenwand des anderen Teilstücks als weitere Führungseinrichtung darin verlaufen kann. Ein solches Übergreifen ist einfach herstellbar bei der Montage des Verbindungsteils und bewirkt eine vorteilhafte definierte Führung der beiden Teilstücke zueinander. In vorteilhafter Ausgestaltung der Erfindung sind an den beiden Seitenwänden des Verbindungsteils Führungseinrichtungen vorgesehen, und zwar an jedem Seitenteil eine Führungseinrichtung, so dass eine vorteilhafte vorgenannte Parallelführung erreicht wird.

Bevorzugt ist das Verbindungsteil insgesamt U-förmig ausgebildet und auch jedes der beiden Teilstücke. Ihr Querschnitt kann im Wesentlichen dem Längsquerschnitt des Verbindungsteils entsprechen bis auf die doppelte Wandstärke beim fertigen Verbindungsteil aufgrund der aneinander anliegenden Wandungen der einzelnen Teilstücke.

In besonders vorteilhafter Ausgestaltung der Erfindung sind die beiden Teilstücke im Wesentlichen identisch zueinander ausgebildet im Hinblick auf die wesentlichen funktionalen Teile wie die vorgenannten Rastverbindungen und die Führungseinrichtungen, vorteilhaft zusätzlich auch die Verbindungsmittel zu den Gehäuseteilen. Geringe konstruktive Abweichungen sind zwar möglich. Besonders vorteilhaft aber sind die beiden Teilstücke vollständig identisch zueinander ausgebildet.

Solche gleichartig oder identisch ausgebildeten Teilstücke können um 180° verdreht zueinander zusammengesetzt werden, so dass das fertige Verbindungsteil nur aus diesen beiden Teilstücken besteht. Eine vollständig identische Fertigung ermöglicht eine Vereinfachung in der Herstellung sowie der Lagerhaltung, da eben nur ein einziges Teil hergestellt werden muss.

Beim fertigen Verbindungsteil können die Teilstücke einander überlappen, vorteilhaft teleskopartig. Dies kann zwar so ausgebildet sein, dass ein Teilstück vollständig innerhalb des anderen Teilstücks verläuft. Dann ist jedoch keine identische Ausgestaltung der beiden Teilstücke zueinander möglich. Um dies zu erreichen kann vorgesehen sein, dass in Längsrichtung des Verbindungsteils gesehen bei der einen Hälfte das erste Teilstück innen liegt und das zweite Teilstück außen liegt, und bei der anderen Hälfte das erste Teilstück außen liegt und das zweite Teilstück innen liegt. Dazu kann am Boden des Verbindungsteils bzw. der Teilstücke eine mittige Teilung zwischen zwei Bodenteilen eines Teilstücks vorgesehen sein, wobei diese Teilung in Längsrichtung verläuft. Das eine Bodenteil ist höher angeordnet und das andere Bodenteil etwas niedriger. Das niedrigere Bodenteil kann derart unterhalb des höheren Bodenteils angeordnet sein, dass die Oberseite des niedrigeren Bauteils unter der Unterseite des höheren Bauteils verläuft. Dann kann beim Zusammensetzen des Verbindungsteils das niedrigere Bodenteil des einen Teilstücks unter das höhere Bodenteil des anderen Teilstücks greifen und umgekehrt. So sind eben auch das Zusammenstecken und die identische Ausgestaltung der beiden Teilstücke zueinander möglich. Auch hierbei kann durch entsprechendes Anliegen der Ober- und Unterseite der Bodenteile sowie ihrer freiliegenden Seitenkanten eine nochmalige Verbesserung der Führung der beiden Teilstücke zueinander erreicht werden.

Bei der vorgenannten Ausgestaltung der Teilstücke mit zwei Bodenteilen kann ein Rastarm mit Rasthaken am höheren Bodenteil vorgesehen sein. Er weist eben eine Längserstreckung in Längsrichtung des Verbindungsteils auf, wobei er vorteilhaft an demjenigen Ende des Bodenteils aus diesem herausgeführt oder herausgeformt ist, welches zum anderen Teilstück hinweist. Er erstreckt sich also entgegen der Richtung zum Zusammenschieben der beiden Teilstücke. Sein anderes Ende ist frei beweglich und weist dort einen Rastvorsprung auf, der nach unten weist bzw. dorthin, wo dann beim fertigen Verbindungsteil das niedrigere Bodenteil des anderen Teilstücks vorgesehen ist.

Im niedrigeren Bodenteil ist an dessen Oberseite eine Rastausnehmung vorgesehen, die entweder nur eine Vertiefung ist oder eine Öffnung. Ihre Längserstreckung sollte derjenigen des Rastarms entsprechen bzw. derjenigen der Längsverschiebbarkeit. So kann der Rasthaken des Rastarms nach dem einmaligen Einrasten in die Rastausnehmung während der Längsverschiebung der beiden Teilstücke zueinander in dieser Rastausnehmung entlang bewegt werden. Ein Anschlag des Rasthakens an ein Ende der Rastausnehmung kann die Längsverschiebbarkeit begrenzen, insbesondere die maximale Längsverschiebbarkeit.

Dabei ist der Rasthaken vorteilhaft so ausgebildet, dass er eine Abschrägung aufweist, die beim Zusammenstecken der Teilstücke ein automatisches Eingreifen in die Rastausnehmung bewirkt. In der anderen Richtung sollte keine Abschrägung vorgesehen sein, so dass hier der Eingriff des Rasthakens in die Rastausnehmung die maximale Längsverschiebbarkeit tatsächlich begrenzt bzw. das Auseinanderziehen des Verbindungsteils begrenzt.

Bei den vorgenannten Führungseinrichtungen kann eben vorgesehen sein, dass oben an einer Seitenwand eines Teilstücks ein U-artiger Übergriff ausgebildet ist, der nach unten offen ist. Vorteilhaft geht der Übergriff nach außen. Eine Seitenwand des anderen Teilstücks verläuft mit ihrem oberen Bereich bzw. ihrer Oberkante in diesem U-artigen Übergriff, insbesondere außen an dieser Seitenwand entlang.

Als vorgenannte Verbindungsmittel des Verbindungsteils bzw. der Teilstücke zu den Gehäuseteilen können an den freien Enden bzw. den Außenenden des Verbindungsteils zumindest entlang der Seitenwände der Teilstücke, vorteilhaft auch an ihrem Boden entlang, nach außen weisende U-förmige Vertiefungen vorgesehen sein. Diese können die Form von Nuten haben und in entsprechende Wandvorsprünge oder Haltevorsprünge an den Verbindungsteilen eingreifen. Die Befestigung des Verbindungsteils bzw. der Teilstücke an den Gehäuseteilen kann vorteilhaft werkzeuglos durch Einstecken oder Einschieben erfolgen, und zwar besonders vorteilhaft mit derselben Richtung bei beiden Gehäuseteilen. Somit kann mit einem einzigen Vorgang ein Verbindungsteil an zwei ausgerichtete Gehäuseteile verbunden werden. Diese Verbindung kann werkzeuglos lösbar ausgebildet sein, vorteilhaft kann sie mit einer Sicherung versehen sein, beispielsweise nach Art einer Rasterung oder Klemmung. Diese kann bewirken, dass eine Verbindung des Verbindungsteils mit einem der Gehäuseteile nicht mehr oder nicht so leicht gelöst wird, insbesondere nicht selbsttätig.

Die Verbindungsmittel sind vorteilhaft an Außenwänden der Gehäuseteile vorgesehen, besonders vorteilhaft an zueinander hin weisenden Außenwänden der Gehäuseteile. Dabei kann der Abstand der Gehäuseteile in diesem Bereich relativ gering sein, vorteilhaft minimal, so dass das Verbindungsteil nur eine begrenzte Strecke überbrücken muss.

Ein Boden der Gehäuseteile kann in etwa in derselben Ebene verlaufen wie ein Boden des Verbindungsteils. Somit ist eine einfache Führung der Kabel von einem Gehäuseteil über das Verbindungsteil zum anderen Gehäuseteil möglich.

### Kurzbeschreibung der Zeichnungen

Ausführungsbeispiele der Erfindung sind in den Zeichnungen schematisch dargestellt und werden im Folgenden näher erläutert. Dabei zeigen:
- Fig. 1: eine Schrägansicht eines einzelnen Teilstücks für ein Verbindungsteil,
- Fig. 2 und 3: Schrägansichten zweier identischer Teilstücke in Anordnung zum Zusammenschieben als Verbindungsteil,
- Fig. 4: ein Verbindungsteil gebildet aus den beiden Teilstücken der Fig. 2 und 3 durch Zusammenschieben,
- Fig. 5: eine schräge Draufsicht auf eine erfindungsgemäße Anordnung zweier Gehäuseteile eines Induktionskochfeldes mit einem Verbindungsteil dazwischen und
- Fig. 6: eine Ansicht von unten auf die Anordnung der Fig. 5.

### Detaillierte Beschreibung der Ausführungsbeispiele

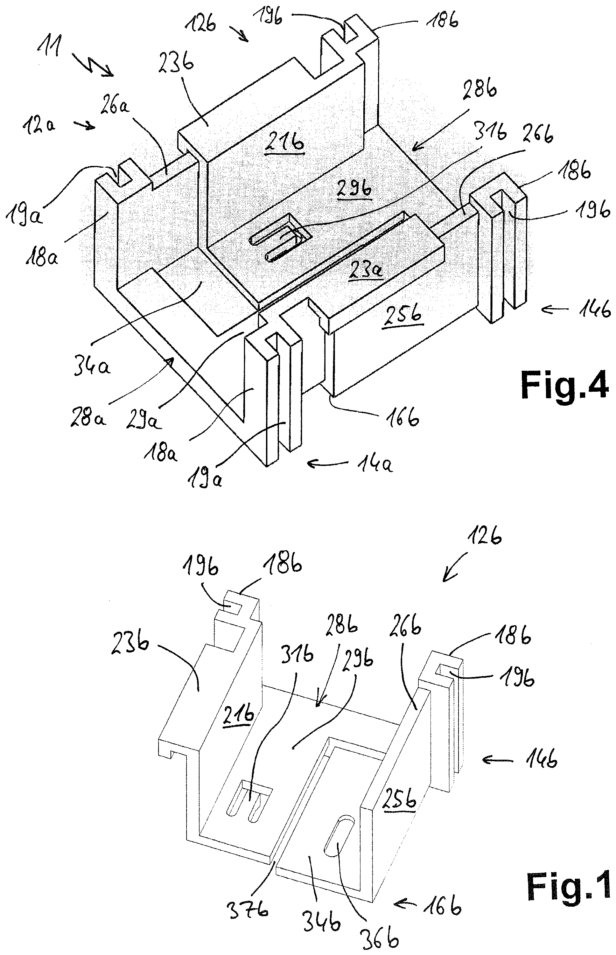

In der Fig. 1 ist ein einzelnes Teilstück 12b dargestellt, wie es zuvor allgemein beschrieben worden ist. Es weist ein vorderes Ende 14b und ein hinteres Ende 16b auf, wobei am vorderen Ende 14b ein umlaufender Nutabschnitt 18b mit einer darin gebildeten Nut 19b vorgesehen ist. Das Teilstück 12b ist insgesamt U-förmig ausgebildet und bildet eine Art Kanal. Hierfür ist eine Seitenwand 21 b vorgesehen, die oben einen Überstand 23b nach Art eines nach außen abstehenden Kragens odgl. aufweist. Der Überstand 23b bildet nach unten eine Art Nut oder Führungsschiene. Eine andere Seitenwand 25b ist etwas weniger hoch bzw. ihre Oberkante 26b liegt geringfügig niedriger als die Vertiefung im Überstand 23b.

Zwischen den Seitenwänden 21b und 25b ist ein Boden 28b ausgebildet. Dieser Boden 28b weist ein oberes Bodenteil 29b und ein unteres Bodenteil 34b auf, die einen geringen Seitenversatz bzw. einen Schlitz 37b zwischen sich aufweisen. Dabei ist die Oberseite des unteren Bodenteils 34b geringfügig unterhalb der Unterseite des oberen Bodenteils 29b vorgesehen. Im oberen Bodenteil 29b ist ein Rastarm 31 b ausgebildet, der an seiner Unterseite am freien Ende einen entsprechend ausgebildeten Rasthaken 32b aufweist mit Anschrägung in eine Richtung. Auf dem unteren Bodenteil 34b ist eine längliche Rastvertiefung 36b vorgesehen.

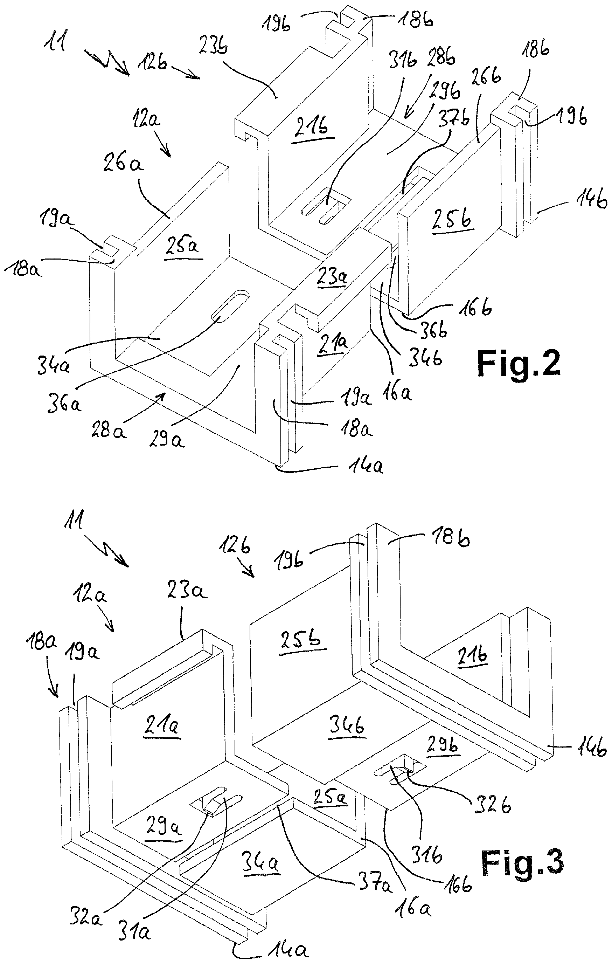

Aus den Fig. 2 und 3 ist zu ersehen, wie an das Teilstück 12b der Fig. 1 ein weiteres identisches Teilstück 12a angesetzt ist, und zwar um 180° zu diesem verdreht derart, dass die hinteren Enden 16a und 16b zueinander weisen. Hieraus ist schon zu erkennen, wie die beiden Teilstücke 12a und 12b sozusagen verschränkt ineinandergreifen werden beim Zusammenschieben. Dabei liegt dann, wie die Fig. 4 im zusammengeschobenen oder zusammengesetzten Zustand zeigt, die Seitenwand 21a innerhalb der Seitenwand 25b, wobei die Seitenwand 21b innerhalb der Seitenwand 25a liegt. Der Überstand 23a übergreift mit geringem Abstand oder sogar anliegend die Oberkante 26b, ebenso wie der Überstand 23b die Oberkante 26a übergreift. Das obere Bodenteil 29a verläuft über dem unteren Bodenteil 34b, wobei der Rastarm 31a mit seinem Rasthaken 32a selbsttätig in die Rastvertiefung 36b eingreift. In entsprechender Weise liegt das obere Bodenteil 29b über dem unteren Bodenteil 34a, der Schlitz 37a erleichtert auch dies. Auch hier ist der Rastarm 31 b mit dem Rasthaken 32b in die Rastvertiefung 36a eingefahren.

Durch die verschränkten Seitenwände 21 und 25 sowie Bodenteile 29 und 34 ist eine Art stabile und sichere Längs- und Parallelführung der Teilstücke 12a und 12b am Verbindungsteil 11 gegeben beim Auseinanderziehen und Zusammenschieben. Beim Auseinanderziehen des Verbindungsstücks 11 bzw. der Teilstücke 12a und 12b voneinander ist ganz offensichtlich, dass die Rasthaken 32a und 32b jeweils an den Rastvertiefungen 36b und 36a anschlagen und die maximale Länge begrenzen. Für das Zusammenschieben kann dies unter Umständen auch gelten, wobei hierfür ein Anschlag eigentlich nicht notwendig ist und vielmehr auch durch die jeweilige Länge der beiden Teilstücke 12 sowie Platzierung der Rastverbindung einstellbar ist.

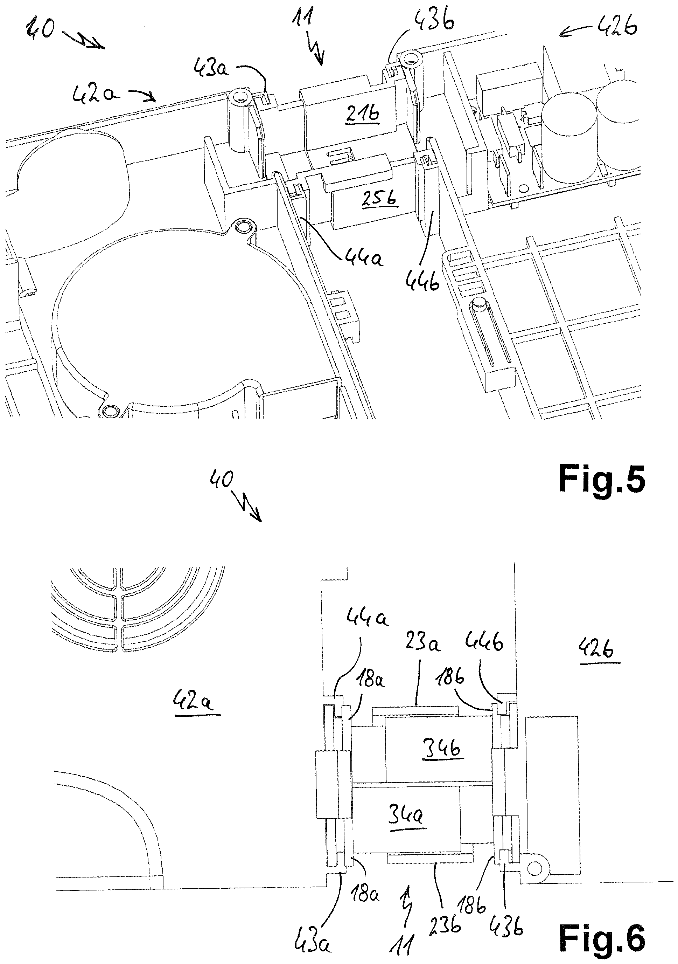

In den Fig. 5 und 6 ist eine erfindungsgemäße Anordnung 40 dargestellt mit zwei Gehäuseteilen 42a links und 42b rechts wie üblicherweise für Induktionskochfelder zur Aufnahme von Funktionseinheiten ausgebildet. Im Gehäuseteil 42a ist beispielhaft ein Lüfter 46a dargestellt. An den Gehäuseteilen 42a und 42b sind Vorsprünge 43a und 43b bzw. 44a und 44b vorgesehen. Diese Vorsprünge sind sozusagen nach innen gedrehte Winkelteile, in die, wie die Ansicht von unten der Fig. 6 verdeutlicht, von oben das Verbindungsteil 11 bzw. die Teilstücke 12a und 12b mit den Nuten 19 der Nutabschnitte 18 eingeschoben werden können. Hierbei kann zur besseren Befestigung eine Art Klemmung oder zusätzliche Rastung vorgesehen sein, welche nicht dargestellt ist, für den Fachmann aber leicht zu realisieren ist. Nach unten ist die Verbindung durch Vorsprünge an der Unterseite der Gehäuseteile 42 begrenzt.

Aus vor allem der Fig. 5 ist leicht zu ersehen, dass der Abstand der beiden Gehäuseteile 42a und 42b der Anordnung 40 zueinander nun um die Längenverstellbarkeit des Verbindungsteils 11 variieren kann. Ein maximaler Weg auseinander ist vorgegeben. Dabei wird auch eine einigermaßen gute Parallelführung gewährleistet und somit eine zusätzliche Ausrichthilfe für die Gehäuseteile 42 gegeben.

## Patentansprüche

1. Anordnung (40) von zwei Gehäuseteilen (42a, b) eines Induktionskochfeldes, **gekennzeichnet durch** ein Verbindungsteil (11) zum Einbau an die zwei Gehäuseteile (42a, b), wobei
- das Verbindungsteil (11) insgesamt in Längsrichtung gesehen U-förmigen Querschnitt aufweist als Kanal,
- das Verbindungsteil zwei Teilstücke (12a, b) aufweist,
- die zwei Teilstücke (12a, b) in Längsrichtung verschiebbar miteinander verbunden sind und unverlierbar aneinander gehaltert sind,
- das erste Teilstück (12a) ein vorderes Ende (14a) aufweist,
- das zweite Teilstück (12b) ein vorderes Ende (14b) aufweist,
- die Teilstücke (12a, b) an ihren vorderen Enden (14a, b) jeweils Verbindungsmittel (18a, b, 19a, b) aufweisen zur formschlüssigen Verbindung mit jeweils einem Gehäuseteil (42a, b) des Induktionskochfeldes,
- das Verbindungsteil (11) mit den Verbindungsmitteln (18a, b, 19a, b) an seinen äußeren Enden (14a, b) mit jeweils einem der Gehäuseteile (42a, b) verbunden ist.

2. Anordnung nach Anspruch 1, **dadurch gekennzeichnet, dass** die Gehäuseteile (42a, b) identisch zueinander ausgebildete Verbindungsmittel (43a, b, 44a, b) für das Verbindungsteil (11) aufweisen, wobei vorzugsweise die Verbindungsmittel (43a, b, 44a, b) an einer Außenwand der Gehäuseteile (42a, b) zueinander hin weisend vorgesehen sind, insbesondere an eine Außenwand zusätzlich von dieser abstehend angeformt.

3. Anordnung nach Anspruch 1 oder 2, **dadurch gekennzeichnet, dass** die Gehäuseteile (42a, b) einen sich über wesentliche Bereiche der Gehäuseteile erstreckenden Boden aufweisen, der im Wesentlichen in einer Ebene verläuft, wobei auch ein Boden (28a, b) des Verbindungsteils (11) in dieser Ebene verläuft.

4. Anordnung nach einem der vorhergehenden Ansprüche, **dadurch gekennzeichnet, dass** das Verbindungsteil (11) eine lösbare Rastverbindung aufweist, die beim Zusammenschieben der beiden Teilstücke (12a, b) einrastet, um deren Lösen voneinander zu verhindern, wobei die Rastverbindung so ausgebildet ist, dass sie eine Längsverschiebbarkeit der beiden Teilstücke (12a, b) gegeneinander um 1 mm bis 20 mm, vorzugsweise 2 mm bis 10 mm, ermöglicht.

5. Anordnung nach Anspruch 4, **dadurch gekennzeichnet, dass** an beiden Teilstücken (12a, b) eine solche Rastverbindung vorgesehen ist.

6. Anordnung nach Anspruch 4 oder 5, **dadurch gekennzeichnet, dass** die beiden Rastverbindungen in etwa in einer Ebene liegen, wobei vorzugsweise beide Rastverbindungen an einem Boden (28a, b) des U-förmigen Querschnitts des Verbindungsteils (11) vorgesehen sind.

7. Anordnung nach einem der vorhergehenden Ansprüche, **dadurch gekennzeichnet, dass** an den beiden Teilstücken (12a, b) mindestens eine, vorzugsweise mindestens zwei, formschlüssige Führungseinrichtungen (23a, b, 25a, b) vorgesehen sind, wobei insbesondere eine Führungseinrichtung so ausgebildet ist, dass ein Führungsteil (23a, b) eines Teilstücks (12a, b) ein Führungsteil (25a, b) des anderen Teilstücks (12a, b) übergreift.

8. Anordnung nach einem der vorhergehenden Ansprüche, **dadurch gekennzeichnet, dass** oben an einer seitlichen Wand (25a, b) eines Teilstücks (12a, b) ein U-artiger Übergriff (23a, b) ausgebildet ist, der nach unten offen ist, wobei eine Seitenwand (25a, b) des anderen Teilstücks (12a, b) in diesem U-artigen Übergriff (23a, b) verläuft.

9. Anordnung nach einem der vorhergehenden Ansprüche, **dadurch gekennzeichnet, dass** jedes der beiden Teilstücke (12a, b) U-förmig ausgebildet ist mit einem Querschnitt, der im Wesentlichen dem Längsquerschnitt des gesamten Verbindungsteils (11) entspricht.

10. Anordnung nach einem der vorhergehenden Ansprüche, **dadurch gekennzeichnet, dass** die beiden Teilstücke (12a, b) identisch zueinander ausgebildet sind, so dass das Verbindungsteil (11) zwei identische Teilstücke aufweist (12a, b), die um 180° verdreht zueinander zusammengesetzt sind, wobei vorzugsweise das Verbindungsteil (11) nur aus diesen beiden Teilstücken (12a, b) besteht.

11. Anordnung nach einem der vorhergehenden Ansprüche, **dadurch gekennzeichnet, dass** am Boden (28a, b) des Verbindungsteils (11) eine mittige Teilung zwischen zwei Bodenteilen (29a, b, 34a, b) an einem Teilstück (12a, b) vorgesehen ist, die in Längsrichtung des Verbindungsteils (11) verläuft, wobei das eine Bodenteil (29a, b) höher angeordnet ist und das andere Bodenteil (34a, b) niedriger angeordnet ist, wobei vorzugsweise das niedrigere Bodenteil (34a, b) derart unterhalb des höheren Bodenteils (29a, b) angeordnet ist, dass die Oberseite des niedrigeren Bodenteils (34a, b) unter der Unterseite des höheren Bodenteils (29a, b) verläuft.

12. Anordnung nach Anspruch 11, **dadurch gekennzeichnet, dass** ein Rastarm (31 a, b) mit Rasthaken (32a, b) am höheren Bodenteil (29a, b) vorgesehen ist, insbesondere mit Längserstreckung in Längsrichtung des Verbindungsteils (11), wobei der Rastarm (31 a, b) am zum anderen Teilstück (12a, b) hinweisenden Ende des Bodenteils (29a, b) aus dem Bodenteil herausgeführt ist und mit seinem anderen Ende frei beweglich ist und dort einen nach unten weisenden Rastvorsprung (32a, b) aufweist.

13. Anordnung nach Anspruch 11 oder 12, **dadurch gekennzeichnet, dass** im niedrigeren Bodenteil (34a, b) an seiner Oberseite eine Rastausnehmung (36a, b) vorgesehen ist, vorzugsweise mit Längserstreckung entlang der Längserstreckung des Verbindungsteils (11).

14. Anordnung nach einem der vorhergehenden Ansprüche, **dadurch gekennzeichnet, dass** zur Verbindung mit den Gehäuseteilen (42a, b) am von dem anderen Teilstück (12a, b) weg weisenden Ende (14a, b) der Teilstücke (12a, b) bzw. an den Außenenden des Verbindungsteils (11) zumindest entlang der Seitenwände (25a, b) der Teilstücke nach außen weisende U-förmige Vertiefungen (19a, b) als Verbindungsmittel in Form von Nuten vorgesehen sind, insbesondere auch am Boden (28a, b) entlang.

## Claims

1. Arrangement (40) of two housing parts (42a, b) of an induction hob, **characterized by** a connecting part (11) for mounting on two housing parts (42a, b), wherein
- the connecting part (11) has a U-shaped cross section overall, as a channel, as seen in the longitudinal direction,
- the connecting part has two segments (12a, b),
- the two segments (12a, b) are connected together in a displaceable manner in the longitudinal direction and are secured captively to one another,
- the first segment (12a) has a front end (14a),
- the second segment (12b) has a front end (14b),
- the segments (12a, b) each have a connecting means (18a, b, 19a, b) at their front ends (14a, b) for connecting to in each case one housing part (42a, b) of the induction hob in a form-fitting manner,
- the connecting part (11) is connected to in each case one of the housing parts (42a, b) by way of the connecting means (18a, b, 19a, b) at its outer ends (14a, b).

2. Arrangement according to claim 1, **characterized in that** the housing parts (42a, b) have connecting means (43a, b, 44a, b), formed in an identical manner to one another, for the connecting part (11), wherein the connecting means (43a, b, 44a, b) are preferably provided on an outer wall of the housing parts (42a, b) in a manner directed towards one another, and in particular integrally formed on an outer wall additionally in a manner projecting away therefrom.

3. Arrangement according to claim 1 or 2, **characterized in that** the housing parts (42a, b) have a bottom that extends over substantial regions of the housing parts, said bottom extending substantially in a plane, wherein a bottom (28a, b) of the connecting part (11) also extends in this plane.

4. Arrangement according to any of the preceding claims, **characterized in that** the connecting part (11) has a releasable latching connection which latches in place when the two segments (12a, b) are pushed together in order to prevent them from being detached from one another, wherein the latching connection is configured such that it allows the two segments (12a, b) to be displaced longitudinally with respect to one another by 1 mm to 20 mm, preferably 2 mm to 10 mm.

5. Arrangement according to claim 4, **characterized in that** such a latching connection is provided on both segments (12a, b).

6. Arrangement according to claim 4 or 5, **characterized in that** the two latching connections are located approximately in a plane, wherein both latching connections are preferably provided at a bottom (28a, b) of the U-shaped cross section of the connecting part (11).

7. Arrangement according to any of the preceding claims, **characterized in that** at least one, preferably at least two, form-fitting guiding devices (23a, b, 25a, b) are provided on the two segments (12a, b), wherein in particular one guiding device is configured such that a guiding part (23a, b) of one segment (12a, b) engages over a guiding part (25a, b) of the other segment (12a, b).

8. Arrangement according to any of the preceding claims, **characterized in that** a downwardly open, U-shaped engaging overhang (23a, b) is formed at the top of a side wall (25a, b) of one segment (12a, b), wherein a side wall (25a, b) of the other segment (12a, b) extends in this U-shaped engaging overhang (23a, b).

9. Arrangement according to any of the preceding claims, **characterized in that** each of the two segments (12a, b) is formed in a U-shaped manner with a cross section which corresponds substantially to the longitudinal cross section of the entire connecting part (11).

10. Arrangement according to any of the preceding claims, **characterized in that** the two segments (12a, b) are formed in an identical manner to one another such that the connecting part (11) has two identical segments (12a, b) which are assembled in a manner rotated through 180° with respect to one another, wherein the connecting part (11) preferably consists only of these two segments (12a, b).

11. Arrangement according to any of the preceding claims, **characterized in that** a central divide between two bottom parts (29a, b, 34a, b) on one segment (12a, b) is provided at the bottom (28a, b) of the connecting part (11), said divide extending in the longitudinal direction of the connecting part (11), wherein the one bottom part (29a, b) is arranged higher and the other bottom part (34a, b) is arranged lower, wherein the lower bottom part (34a, b) is preferably arranged beneath the higher bottom part (29a, b) such that the top side of the lower bottom part (34a, b) extends under the underside of the higher bottom part (29a, b).

12. Arrangement according to claim 11, **characterized in that** a latching arm (31 a, b) having a catch (32a, b) is provided on the higher bottom part (29a, b), in particular having a longitudinal extent in the longitudinal direction of the connecting part (11), wherein the latching arm (31 a, b) leads out of the bottom part (29a, b) at that end of the bottom part that is directed towards the other segment (12a, b) and is freely movable at its other end and has a downwardly directed latching protrusion (32a, b) there.

13. Arrangement according to claim 11 or 12, **characterized in that** a latching cutout (36a, b) is provided in the top side of the lower bottom part (34a, b), preferably having a longitudinal extent along the longitudinal extent of the connecting part (11).

14. Arrangement according to any of the preceding claims, **characterized in that**, for connecting to the housing parts (42a, b), at that end (14a, b) of the segments (12a, b) that is directed away from the other segment (12a, b), or at the outer ends of the connecting part (11) at least along the side walls (25a, b) of the segments, outwardly directed U-shaped depressions (19a, b) are provided as connecting means in the form of grooves, in particular also along the bottom (28a, b).

## Revendications

1. Agencement (40) de deux parties de boîtier (42a, b) d'une plaque de cuisson par induction,
**caractérisé par**
une partie de liaison (11) qui peut être montée sur les deux parties de boîtier (42a, b),
- vue dans le sens de sa longueur, la partie de liaison (11) configurée comme canal présentant une section transversale globalement en forme de U,
- la partie de liaison présentant deux pièces partielles (12a, b),
- les deux pièces partielles (12a, b) étant reliées l'une à l'autre à coulissement dans le sens de la longueur et étant maintenues l'une contre l'autre de manière à ne pas pouvoir se détacher,
- la première pièce partielle (12a) présentant une extrémité avant (14a),
- la deuxième pièce partielle (12b) présentant une extrémité avant (14b),
- chacune des pièces partielles (12a, b) présentant à son extrémité avant (14a, b) des moyens de liaison (18a, b, 19a, b) qui permettent une liaison en correspondance géométrique avec une partie de boîtier (42a, b) respective de la plaque de cuisson par induction et
- la partie de liaison (11) et ses moyens de liaison (18a, b, 19a, b) étant reliée par chacune de ses extrémités extérieures (14a, b) à une partie de boîtier (42a, b) respective.

2. Agencement selon la revendication 1, **caractérisé en ce que** les parties de boîtier (42a, b) présentent pour la partie de liaison (11) des moyens de liaison (43a, b, 44a, b) de configuration identique, les moyens de liaison (43a, b, 44a, b) étant prévus de manière à être orientés l'un vers l'autre sur une paroi extérieure des parties de boîtier (42a, b) et étant en particulier façonnés en outre de manière à déborder de cette paroi extérieure.

3. Agencement selon les revendications 1 ou 2, **caractérisé en ce que** les parties de boîtier (42a, b) présentent un fond qui s'étend sur la majeure partie des parties de boîtier et qui s'étend essentiellement dans un plan, un fond (28a, b) de la partie de liaison (11) s'étendant également dans ce plan.

4. Agencement selon l'une des revendications précédentes, **caractérisé en ce que** la partie de liaison (11) présente une liaison encliquetable libérable qui s'encliquette lorsque les deux pièces partielles (12a, b) sont réunies pour empêcher qu'elles se libèrent l'une de l'autre, la liaison encliquetable étant configurée de manière à permettre un coulissement longitudinal des deux pièces partielles (12a, b) l'une par rapport à l'autre sur 1 mm à 20 mm et de préférence sur 2 mm à 10 mm.

5. Agencement selon la revendication 4, **caractérisé en ce qu'**une telle liaison encliquetable est prévue sur les deux pièces partielles (12a, b).

6. Agencement selon les revendications 4 ou 5, **caractérisé en ce que** les deux liaisons encliquetables sont situées sensiblement dans un plan, les deux liaisons encliquetables étant de préférence prévues sur un fond (28a, b) de la section transversale en forme de U de la partie de liaison (11).

7. Agencement selon l'une des revendications précédentes, **caractérisé en ce qu'**au moins un et de préférence au moins deux dispositifs de guidage (23a, b, 25a, b) en correspondance géométrique sont prévus, en particulier un dispositif de guidage étant configuré de telle sorte qu'une pièce de guidage (23a, b) d'une pièce partielle (12a, b) chevauche une pièce de guidage (25a, b) de l'autre pièce partielle (12a, b).

8. Agencement selon l'une des revendications précédentes, **caractérisé en ce que** sur le haut d'une paroi latérale (25a, b) d'une pièce partielle (12a, b) est configuré un chevauchement (23a, b) en forme de U ouvert vers le bas, une paroi latérale (25a, b) de l'autre pièce partielle (12a, b) s'étendant dans ce chevauchement (23a, b) en forme de U.

9. Agencement selon l'une des revendications précédentes, **caractérisé en ce que** chacune des deux pièces partielles (12a, b) est configurée en forme de U et présente une section transversale qui correspond essentiellement à la section transversale longitudinale de l'ensemble de la partie de liaison (11).

10. Agencement selon l'une des revendications précédentes, **caractérisé en ce que** les deux pièces partielles (12a, b) sont configurées à l'identique de telle sorte que la partie de liaison (11) présente deux pièces partielles (12a, b) identiques assemblées en étant tournées de 180° l'une par rapport à l'autre, la partie de liaison (11) étant constituée de préférence uniquement de ces deux pièces partielles (12a, b).

11. Agencement selon l'une des revendications précédentes, **caractérisé en ce qu'**une division centrale entre deux parties de fond (29a, b, 34a, b) est prévue sur une pièce partielle (12a, b) sur le fond (28a, b) de la partie de liaison (11) et s'étend dans le sens de la longueur de la partie de liaison (11), une des parties de fond (29a, b) étant disposées plus haut et l'autre partie de fond (34a, b) étant disposée plus bas, la partie de fond (34a, b) située plus bas étant disposée en dessous de la partie de fond (29a, b) située plus haut de telle sorte que le côté supérieur de la partie de fond (34a, b) située plus bas s'étende en dessous du côté inférieur de la partie de fond (29a, b) située plus haut.

12. Agencement selon la revendication 11, **caractérisé en ce qu'**un bras d'encliquetage (31 a, b) présentant des crochets d'encliquetage (32a, b) est prévu sur la partie de fond (29a, b) située plus haut, en particulier avec une extension longitudinale dans le sens de la longueur de la partie de liaison (11), le bras d'encliquetage (31 a, b) prolongeant la partie de fond à l'extrémité de la partie de fond (29a, b) tournée vers l'autre pièce partielle (12a, b) et étant mobile librement à son autre extrémité, et présente là une saillie d'encliquetage (32a, b) tournée vers le bas.

13. Agencement selon les revendications 11 ou 12, **caractérisé en ce qu'**une découpe d'encliquetage (36a, b) dont l'extension longitudinale s'étend de préférence le long de l'extension longitudinal de la partie de liaison (11), est prévue sur le côté supérieur de la partie de fond (34a, b) située plus bas.

14. Agencement selon l'une des revendications précédentes, **caractérisé en ce que** pour la liaison avec les parties de boîtier (42a, b), à l'extrémité (14a, b) des pièces partielles (12a, b) tournée à l'opposé de l'autre pièce partielle (12a, b) ou aux extrémités extérieures de la partie de liaison (11), au moins le long des parois latérales (25a, b) des pièces partielles, des creux (19a, b) en forme de U tournés vers l'extérieur sont prévus comme moyens de liaison en forme de rainure, en particulier le long du fond (28a, b).
